# DEMANDE DE BREVET EUROPEEN

(11) **EP 2 141 465 A1**
(43) Date de publication de la demande: **06.01.2010**
(21) Numéro de dépôt: 08305369.4
(22) Date de dépôt: 01.07.2008
(51) Int. Cl.: G01F 15/06, G01F 15/00

(54) **Agencement de fixation d'un module de tele releve sur le capot d'un compteur de fluide**

(71) Demandeur: Actaris SAS, 92100 Boulogne Billancourt (FR)
(72) Inventeur: Bulteau, Serge, 69840, JULIENAS (FR); Guillot, Denis, 01310, BUELLAS (FR)
(74) Mandataire: Lenne, Laurence

(57) **Abrégé**

L'invention concerne un agencement de fixation d'un module de télé-relevé (5) sur le capot d'un compteur de fluide (1), au moyen d'un élément de fixation (7, 9) associé au dit module.

Selon l'invention, ledit élément de fixation comporte un agencement de détection à distance de son positionnement et de son enlèvement.

## Description

L'invention se rapporte à un agencement destiné à la fixation d'un module de télé-relevé sur le capot d'un compteur de fluide.

Un tel module de télé-relevé est destiné au relevé à distance de la consommation et est installé sur des compteurs éventuellement déjà installés. Pour ce faire, il est appliqué sur la face supérieure du capot du totalisateur, afin d'assurer un positionnement précis de l'agencement de lecture du module par rapport à un agencement interne au totalisateur et permettant la détection de la consommation, par exemple le disque indicateur. Cette détection peut être effectuée de façon optique, capacitive, inductive ou autre, par exemple en scrutant le déplacement du disque indicateur.

Il est connu, comme décrit dans le document de brevet EP 1 586 869, de réaliser la fixation d'un module de télé-relevé sur le capot d'un compteur de fluide par l'intermédiaire d'un élément mâle fileté, de type vis, traversant le module et coopérant avec un insert femelle taraudé surmoulé dans le capot du compteur et destiné à recevoir l'élément mâle par vissage.

Dans un tel agencement, un dispositif de plombage à effet visuel peut être inséré à force dans une cavité conformée dans le capot du module et entourant la tête de la vis. Ce dispositif de plombage est une pièce ronde de matière plastique souple qui est encastrée dans la cavité, qui recouvre la tête de la vis et qui ne peut être enlevée, par exemple au moyen d'un tournevis, qu'avec sa destruction au moins partielle, ce qui permet de détecter visuellement l'enlèvement du module ou la fraude.

Cet agencement ne permet pas de détecter à distance l'enlèvement du module de télé-relevé.

Le document de brevet EP 1 590 633, qui décrit un module de télé-relevé relevant la consommation par détection optique du disque indicateur, propose pour ce faire d'équiper le module d'un émetteur optique dont la trace sur le disque indicateur est centré sur son axe de symétrie face à une surface réfléchissante. L'absence de faisceau réfléchi indique que le module n'est pas positionné sur le compteur.

Cette détection de présence a deux fonctions. Tout d'abord, elle permet de détecter automatiquement que le module est installé sur le compteur et donc de commencer le relevé de la consommation. Ensuite, elle permet de détecter un enlèvement frauduleux du module et d'actionner une alarme transmise à distance.

De façon plus générale, il est donc connu de disposer un capteur de détection de présence dans le module de télé-relevé et une cible correspondante ou équivalent dans le totalisateur à proximité de son capot.

Cependant, un tel agencement de détection nécessite une conception spécifique du compteur et du module qui sont donc d'un coût relativement élevé.

Par ailleurs, le compteur doit comporter ladite cible et doit donc être spécifiquement conçu en fonction du module associé. Il est donc impossible d'équiper d'un module des compteurs déjà existants et éventuellement déjà installés et non équipés de cette cible.

L'invention résout ces problèmes techniques et, pour ce faire, elle propose un agencement de fixation d'un module de télé-relevé sur le capot d'un compteur de fluide, au moyen d'un élément de fixation associé au dit module, caractérisé en ce que ledit élément de fixation comporte un agencement de détection à distance de son positionnement et de son enlèvement.

Grâce à l'invention, la détection du positionnement du module est effectuée par l'intermédiaire de son élément de fixation. Il en découle qu'aucune adaptation n'est nécessaire sur le compteur en soi. Il est donc possible d'équiper d'un tel module des compteurs déjà existants et éventuellement déjà installés.

Selon un mode de réalisation préféré, ledit agencement de détection comporte un capteur disposé dans le module et une cible associée disposée dans ledit élément de fixation.

Le capteur est ainsi protégé à l'intérieur du module de télé-relevé, la détection de la cible se faisant au travers du capot en matière plastique du module. La cible, n'ayant aucune connexion électrique, est disposée dans l'élément de fixation, sans contrainte d'étanchéité.

Ladite détection est de préférence à effet électromagnétique.

Et ledit capteur peut être un capteur à effet Hall et ladite cible un aimant.

Cette détection peut également être réalisée entre autres au moyen d'un capteur Reed et d'un aimant en tant que cible, d'une bobine électromagnétique en tant que capteur et d'une plaque métallique en tant que cible, d'un capteur capacitif et d'une plaque métallique en tant que cible.

Avantageusement, ledit élément de fixation comporte un dispositif de plombage à effet visuel comportant ledit agencement de détection.

Et ledit dispositif de plombage à effet visuel peut être une pièce en matière plastique et la dite cible être surmoulée dans cette pièce.

Selon un mode de réalisation spécifique, ledit élément de fixation est une vis traversant le module et vissée dans un insert femelle taraudé surmoulé dans le capot du compteur, la tête de ladite vis étant disposée sur la face externe du dit module.

Dans ce cas, de préférence, ladite vis comporte un dispositif de plombage à effet visuel inséré à force dans une cavité entourant la tête de la vis et comportant ledit agencement de détection.

La cible peut également être directement incluse dans la vis, avantageusement dans la tête de vis.

L'invention est décrite ci-après plus en détail à l'aide de figure ne représentant qu'un mode de réalisation préféré de l'invention.

La figure 1 est une vue en perspective éclatée de l'agencement de fixation d'un module de télé-relevé conforme à l'invention.

La figure 2 est une vue en coupe de l'agencement de fixation d'un module de télé-relevé conforme à l'invention.

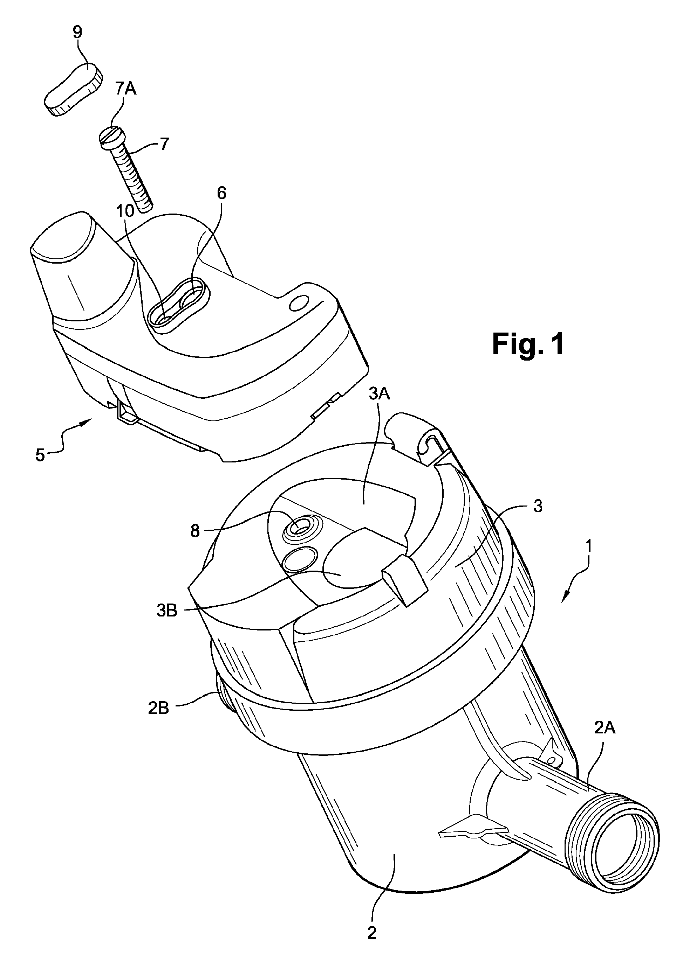

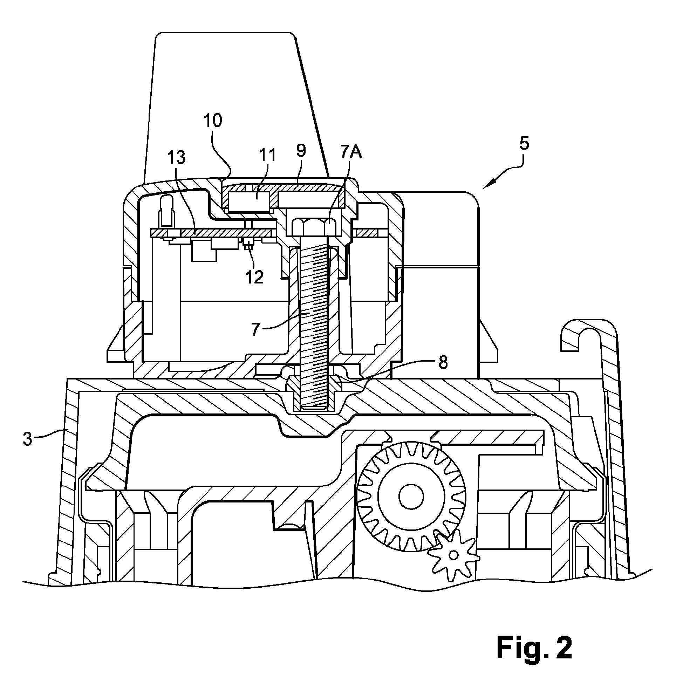

Les figures 1 et 2 représentent un compteur 1 de fluide, plus précisément d'eau, comportant un carter dit bâche 2 pourvu d'une canalisation d'arrivée 2A et une canalisation de sortie 2B de l'eau et surmonté d'un totalisateur 3 contenant un mécanisme de transmission et de réduction de la rotation de l'arbre d'un élément mesurant, tel qu'une turbine ou une chambre volumétrique, contenu dans la bâche 2 vers un dispositif d'affichage de la consommation 3A et un disque indicateur rotatif 3B.

Un module de détection par télé-relevé 5 est posé sur la paroi supérieure du compteur 1 afin de détecter à distance la consommation d'eau ainsi que son sens de circulation. Pour sa fixation, ce module 5 comporte un orifice traversant 6 dans lequel est introduite une vis 7 dont l'extrémité est vissée dans un insert métallique 8 taraudé surmoulé dans le capot du totalisateur 3.

L'élément de fixation constitué de la vis 7 comporte un dispositif de plombage à effet visuel 9 qui est une pièce en matière plastique souple insérée à force dans une cavité 10 agencée dans le capot du module 5 et entourant la tête 7A de la vis 7.

Conformément à l'invention, cet agencement de fixation d'un module de télé-relevé 5 sur le capot d'un compteur de fluide 1 comporte donc un élément de fixation associé au module et comprenant une vis 7 et un dispositif de plombage à effet visuel 9, cet élément de fixation comportant un agencement de détection à distance de son positionnement et de son enlèvement.

Dans le mode de réalisation préféré, illustré sur les figures, cette détection est à effet électromagnétique et un capteur à effet Hall 12 est disposé dans le module 5, sur la carte électronique 13 de ce dernier, et une cible associée, constituée d'un aimant 11, est surmoulée dans l'élément de plombage à effet visuel 9.

Le dispositif de plombage visuel 9 a une forme correspondante à celle de la cavité 10, assurant un positionnement relatif unique de ce dispositif de plombage visuel.

La tension du capteur à effet Hall 12 est mesurée par le microcontrôleur déjà prévu dans le module de télé relevé 5 et un seuil de tension est défini, afin de détecter la présence de l'aimant 11 dans le dispositif de plombage 9.

Lors de l'installation du module 5 sur le compteur 3, le module est fixé par vissage de la vis 7 dans l'insert taraudé 8 du compteur, puis le dispositif de plombage à effet visuel 9 est inséré à force dans la cavité 10 correspondant, disposant, se faisant, l'aimant 11 à proximité du capteur à effet Hall 12 et actionnant un signal indiquant la mise en place du module et entraînant sa mise en fonction de relevé à distance.

Lors d'un essai frauduleux de démontage du module, le dispositif de plombage à effet visuel 9 doit être enlevé pour dévissage de la vis 7 et, de ce fait, l'aimant 11 est éloigné du capteur à effet Hall 12 et il en découle l'actionnement un signal d'alarme indiquant la tentative de fraude.

## Revendications

1. Agencement de fixation d'un module de télé-relevé (5) sur le capot d'un compteur de fluide (1), au moyen d'un élément de fixation associé au dit module, **caractérisé en ce que** ledit élément de fixation comporte un agencement de détection à distance de son positionnement et de son enlèvement.

2. Agencement selon la revendication précédente, **caractérisé en ce que** ledit agencement de détection comporte un capteur disposé dans le module (5) et une cible associée disposée dans ledit élément de fixation.

3. Agencement selon l'une des revendications précédentes, **caractérisé en ce que** ladite détection est à effet électromagnétique.

4. Agencement selon les revendications 2 et 3, **caractérisé en ce que** ledit capteur est un capteur à effet Hall (12) et ladite cible un aimant (11).

5. Agencement selon l'une des revendications précédentes, **caractérisé en ce que** ledit élément de fixation comporte un dispositif de plombage à effet visuel (9) comportant ledit agencement de détection.

6. Agencement selon les revendications 2 et 5, **caractérisé en ce que** ledit dispositif de plombage à effet manuel (9) est une pièce en matière plastique et la dite cible (11) est surmoulée dans cette pièce.

7. Agencement selon l'une des revendications précédentes, **caractérisé en ce que** ledit élément de fixation est une vis (7) traversant le module (5) et vissée dans un insert femelle taraudé (8) surmoulé dans le capot du compteur (1), la tête (7A) de ladite vis étant disposée sur la face externe du dit module.

8. Agencement selon la revendication précédente, **caractérisé en ce que** ladite vis (7) comporte un dispositif de plombage à effet visuel (9) inséré à force dans une cavité (10) entourant la tête (7A) de la vis et comportant ledit agencement de détection.
